# EUROPEAN PATENT SPECIFICATION

(11) **EP 4 657 814 B1**
(45) Date of publication and mention of the grant of the patent: **18.11.2026**
(21) Application number: 24178560.9
(22) Date of filing: 28.05.2024
(51) Int. Cl.: H04L 41/14, H04L 41/16, H04L 41/142, H04W 24/02

(54) **METHOD FOR REALIZING DATA COLLECTION AND/OR DATA ANALYTICS REGARDING ARTIFICIAL INTELLIGENCE/MACHINE-LEARNING-USABLE DATA AND/OR STATISTICS-USABLE DATA WITHIN A MOBILE COMMUNICATION NETWORK, SYSTEM OR MOBILE COMMUNICATION NETWORK, CORE NETWORK DATA COLLECTION ENTITY OR FUNCTIONALITY OR CORE NETWORK STATISTICS AND MACHINE-LEARNING PIPELINE ENTITY OR FUNCTIONALITY, PROGRAM AND COMPUTER-READABLE MEDIUM**
VERFAHREN ZUR DATENERFASSUNG UND/ODER DATENANALYSE VON KÜNSTLICHER INTELLIGENZ UND/ODER MASCHINENLERNEN
RÉSEAU MOBILE, ENTITÉ DE COLLECTE DE DONNÉES DE RÉSEAU OU SON RÉSEAU CENTRAL

(43) Date of publication of application: 03.12.2025
(73) Proprietor: Deutsche Telekom AG, 53113 Bonn (DE)
(72) Inventor: BLICKER, Stephan, 53343 Wachtberg (DE)
(74) Representative: Schwöbel, Thilo K.

(56) References cited:
- CN-A- 116 866 956
- YANG LI ET AL: "Enabling AutoML for Zero-Touch Network Security: Use-Case Driven Analysis", IEEE TRANSACTIONS ON NETWORK AND SERVICE MANAGEMENT, IEEE, vol. 21, no. 3, 12 March 2024 (2024-03-12), pages 3555 - 3582, XP011975941, DOI: 10.1109/TNSM.2024.3376631
- BALI AHMED ET AL: "Enhancing Traffic Load Forecasting in 5G Networks: A Statistical and Temporal Feature Engineering Approach", 2024 INTERNATIONAL WIRELESS COMMUNICATIONS AND MOBILE COMPUTING (IWCMC), IEEE, 27 May 2024 (2024-05-27), pages 1661 - 1667, XP034643346, DOI: 10.1109/IWCMC61514.2024.10592491
- SHEN WANG ET AL: "Applications of Explainable AI for 6G: Technical Aspects, Use Cases, and Research Challenges", ARXIV.ORG, CORNELL UNIVERSITY LIBRARY, 201 OLIN LIBRARY CORNELL UNIVERSITY ITHACA, NY 14853, 7 February 2023 (2023-02-07), XP091434496

## Description

### BACKGROUND

The present invention relates a method for realizing data collection and/or data analytics regarding artificial intelligence/machine-learning-usable data within a mobile communication network and from a plurality of data sources and/or using a plurality of data formats and collection procedures, wherein the mobile communication network comprises, or is associated with or assigned to a radio access network, and wherein the mobile communication network also comprises a core network.

Additionally, the present invention relates to a mobile communication network for realizing data collection regarding artificial intelligence/machine-learning-usable data within the mobile communication network and from a plurality of data sources and/or using a plurality of data formats and collection procedures, wherein the mobile communication network comprises, or is associated with or assigned to a radio access network, and wherein the mobile communication network also comprises a core network.

Furthermore, the present invention relates to a core network data collection entity or functionality for realizing data collection regarding artificial intelligence/machine-learning-usable data within a mobile communication network and from a plurality of data sources and/or using a plurality of data formats and collection procedures, wherein the core network data collection entity or functionality is part of the mobile communication network.

Furthermore, the present invention relates to a core network statistics and machine-learning pipeline entity or functionality for realizing data analytics regarding artificial intelligence/machine-learning-usable data within the mobile communication network, wherein the core network statistics and machine-learning pipeline entity or functionality is part of the mobile communication network.

Furthermore, the present invention relates to a program and to a computer-readable medium for realizing data collection and/or data analytics according to the inventive method.

In conventionally known mobile communication networks, it is known to use fifth generation ("5G") cellular systems, also referred to as New Radio (NR). New Radio is developed for a maximum flexibility to support multiple and substantially different use cases.

At a high level, the 5G system (5GS) consists of an access network and a core network. The access network provides user equipments with connectivity to the core network, e.g., via base stations or base station entities such as gNBs or ng-eNBs. The core network typically includes a variety of network functions or services (NFs) that provide a wide range of different functionalities such as session management, connection management, charging, authentication, etc.

Machine learning (ML) is a type of artificial intelligence (AI) that focuses on the use of data and algorithms to imitate the way that humans learn, gradually improving its accuracy. ML algorithms build models based on sample (or "training") data, with the models being used subsequently to make predictions or decisions. ML algorithms can be used in a wide variety of applications (e.g., medicine, speech recognition, etc.) in which it is difficult or unfeasible to develop conventional algorithms to perform the needed tasks. AI/ML is being used in a range of application domains across industry sectors including mobile communications. For example, user equipment (UEs, e.g., smartphones, automotive, robots) are increasingly using Al/ML models to enable applications such as speech recognition, image recognition, video processing, etc.

The quality and performance of artificial intelligence/machine-learning algorithms depend on a large degree on data, especially training data.

Typically, there are many different data sources present or available to be collected data from. For example, 3GPP specified the service-based interface (SBI) for data collection from network functions or services (NFs) (TS 23.288). However, many suppliers offer various proprietary solutions for data collection (event data exposure, proprietary protocols like IPFIX, observabiltiy frameworks with cloud data exposure etc.). This typically complicates the collection of such data, used in artificial intelligence/machine-learning scenarios, especially as training data.

An approach focused on using Automated Machine Learning (AutoML) techniques to automate data preprocessing, feature engineering, model selection, and intrusion detection tasks for improving network security within zero-touch networks has been suggested ("Enabling AutoML for Zero-Touch Network Security: Use-Case Driven Analysis, Li Yang, Mirna El Rajab, Abdallah Shami and Sami Muhaidat, IEEE Transactions on Network and Service Management, Vol. 21, No. 3, June 2024, referred to as D1 in what follows). The contents of D1 are centered on automating the internal ML pipeline for specific security use cases without, however, proposing any architectural separation between data collection and analytics. D1 also does not teach how to decouple data acquisition from analytics consumption. Furthermore, D1 is narrowly tailored to security applications and does not support multi-source, multi-format data ingestion, flexible third-party analytics integration, or general Al/ML analytics for diverse applications as enabled by the present invention's broader, modular core network architecture.

Furthermore, a method for improving traffic load prediction in 5G networks through statistical and temporal feature engineering, aiming to enhance energy efficiency by better aligning network resources with traffic demands has been proposed ("Enhancing Traffic Load Forecasting in 5G Networks: A Statistical and Temporal Feature Engineering Approach", Ahmed Bali, Mohamed Cheriet and Abdelouahed Gherbi, The 20th International Wireless Communications & Mobile Computing Conference, referred to as D2 in what follows). D2 uses a specific dataset collected from base stations and applies machine learning models after enriching the data, but it does not address architectural aspects of the network itself. Similarly, D2 fails to propose any architectural separation between data collection and analytics. D2 also does not teach how to decouple data acquisition from analytics consumption.

In this context, it is especially desirable to be able to realize a possibility to easily and efficiently collect and use such data.

### SUMMARY

An object of the present invention is to provide a technically simple, effective and cost effective solution for realizing data collection and/or data analytics regarding artificial intelligence/machine-learning-usable data within a mobile communication network and from a plurality of data sources and/or using a plurality of data formats and collection procedures. A further object of the present invention is to provide a corresponding mobile communication network, a corresponding core network data collection entity or functionality, a corresponding core network statistics and machine-learning pipeline entity or functionality, and a corresponding program and computer-readable medium.

The object of the present invention is achieved by a method for realizing data collection and/or data analytics regarding artificial intelligence/machine-learning-usable data within a mobile communication network and from a plurality of data sources and/or using a plurality of data formats and collection procedures, wherein the mobile communication network comprises, or is associated with or assigned to a radio access network, and wherein the mobile communication network also comprises a core network, wherein the mobile communication network, especially the core network, comprises a core network data collection entity or functionality and a core network statistics and machine-learning pipeline entity or functionality, the core network data collection entity or functionality providing artificial intelligence/machine-learning usable data base content, especially to the core network statistics and machine-learning pipeline entity or functionality,
wherein, in order to realize data collection and/or data analytics regarding artificial intelligence/machine-learning-usable data within the mobile communication network, the method comprises the following steps:
-- in a first step, data collection is performed using a plurality of data sources and/or a plurality of data formats and using a plurality of data collection procedures,
-- in a second step, the collected data are preprocessed and provided as artificial intelligence/machine-learning-usable data in a target store entity or functionality,
-- in a third step, the core network statistics and machine-learning pipeline entity or functionality uses the collected and preprocessed data of the target store entity or functionality.

According to the present invention, it is advantageously possible to streamline all core network data exposure options in one dedicated collection entity, being represented by the core network data collection entity or functionality and/or by the target store entity or functionality. All proprietary solutions shall deliver the data to this core network data collection entity or functionality and/or target store entity or functionality (or instances of it based on the data).

This advantageously provides the possibility of an enhanced flexibility in terms of analytics pipelines in comparison to 3GPP network data analytics function NWDAF and advantageously also provides means for the lifecycle management.

Especially according to the present invention, it is advantageously possible to provide a disaggregation of data collection on the one hand, and data analytics on the other hand. Hence, it is advantageously possible to consider of state of the art lifecycle management analytics products, maximum programming flexibility, especially including third party access with the community of mobile communication network analytics pipelines.

According to the present invention, this is possible to realize by means of the mobile communication network, especially the core network, comprising the core network data collection entity or functionality and the core network statistics and machine-learning pipeline entity or functionality, wherein the core network data collection entity or functionality provides artificial intelligence/machine-learning usable data base content in the target store entity or functionality, and the core network statistics and machine-learning pipeline entity or functionality uses the collected and preprocessed data of the target store entity or functionality for further processing, especially analytics and artificial intelligence/machine-learning operations.

According to the present invention, it is furthermore advantageously possible and preferred that the core network statistics and machine-learning pipeline entity or functionality and/or external consumers via network exposure function use/uses the collected and preprocessed data of the target store entity or functionality in view of at least one statistics pipeline and/or at least one artificial intelligence/machine-learning pipeline.

It is thereby advantageously possible to realize and implement the inventive method in a comparatively simple and efficient manner.

According to the present invention, it is furthermore advantageously possible and preferred that preprocessing the collected data and providing such data as artificial intelligence/machine-learning-usable data and/or as statistics-usable data involves at least one out of the following:
-- cleaning of the collected data or of at least part thereof,
-- integrating the collected data or at least part thereof,
-- transforming the collected data or at least part thereof,
-- normalizing the collected data or at least part thereof,
-- feature engineering regarding the collected data or at least part thereof.

It is thereby advantageously possible to realize and implement the inventive method in a comparatively simple and efficient manner.

Furthermore, it is advantageously possible and preferred according to the present invention that at least one out of the following data sources and/or data formats are used in view of performing data collection:
-- data from a plurality of user equipments and/or regarding a plurality of user equipments,
-- data from the access network and/or the radio access network,
-- data from the core network,
-- data from applications, especially applications that run on, or are executed on or by, user equipments,
-- data generated by and/or obtained from operations and maintenance analytics,
-- data generated by and/or obtained from a cloud.

It is thereby advantageously possible to efficiently realize and implement the inventive method in a comparatively simple and flexible manner.

Furthermore, it is advantageously possible and preferred according to the present invention that at least one out of the following collection procedures are used:
-- service-based architecture-related collection procedures, especially using a service-based interface and/or service-based interface data from protocols,
-- proprietary event data or protocols from suppliers, especially using internet protocol flow information export, IPFIX,
-- all transferred account procedures, TAP, proprietary data from suppliers,
-- proprietary cloud observability data,
-- application programming interfaces.

It is thereby advantageously possible to realize and implement the inventive method in a comparatively simple and efficient manner.

Furthermore, it is advantageously possible and preferred according to the present invention that the core network data collection entity or functionality is instantiated per data type or as a central network function.

It is thereby advantageously possible to realize and implement the inventive method in a comparatively simple and efficient manner.

Furthermore, the present invention relates to a mobile communication network for realizing data collection and/or data analytics regarding artificial intelligence/machine-learning-usable data within the mobile communication network and from a plurality of data sources and/or using a plurality of data formats and collection procedures, wherein the mobile communication network comprises, or is associated with or assigned to a radio access network, and wherein the mobile communication network also comprises a core network,
wherein the mobile communication network, especially the core network, comprises a core network data collection entity or functionality and a core network statistics and machine-learning pipeline entity or functionality, the core network data collection entity or functionality providing artificial intelligence/machine-learning usable data base content, especially to the core network statistics and machine-learning pipeline entity or functionality,
wherein, in order to realize data collection and/or data analytics regarding artificial intelligence/machine-learning-usable data within the mobile communication network, the mobile communication network is configured such that:
   -- data collection is performed using a plurality of data sources and/or a plurality of data formats and using a plurality of data collection procedures,
   -- the collected data are preprocessed and provided as artificial intelligence/machine-learning-usable data in a target store entity or functionality,
   -- the core network statistics and machine-learning pipeline entity or functionality uses the collected and preprocessed data of the target store entity or functionality.

Furthermore, the present invention relates to a core network data collection entity or functionality for realizing data collection regarding artificial intelligence/machine-learning-usable data within the mobile communication network of the present invention and from a plurality of data sources and/or using a plurality of data formats and collection procedures, wherein the core network data collection entity or functionality is part of the mobile communication network of the present invention,
wherein the core network data collection entity or functionality provides artificial intelligence/machine-learning usable data base content, especially to a core network statistics and machine-learning pipeline entity or functionality of the present invention, wherein, in order to realize data collection and/or data analytics regarding artificial intelligence/machine-learning-usable data within the mobile communication network of the present invention, the core network data collection entity or functionality is configured such that:
-- data collection is performed using a plurality of data sources and/or a plurality of data formats and using a plurality of data collection procedures,
-- the collected data are preprocessed and provided as artificial intelligence/machine-learning-usable data in a target store entity or functionality.

Furthermore, the present invention relates to a core network statistics and machine-learning pipeline entity or functionality for realizing data analytics regarding artificial intelligence/machine-learning-usable data within a mobile communication network of the present invention, wherein the core network statistics and machine-learning pipeline entity or functionality is part of the mobile communication network of the present invention, wherein a core network data collection entity or functionality of the present invention provides artificial intelligence/machine-learning usable data base content to the core network statistics and machine-learning pipeline entity or functionality , wherein, in order to realize data analytics regarding artificial intelligence/machine-learning-usable data within the mobile communication network of the present invention, the core network statistics and machine-learning pipeline entity or functionality is configured such that:
-- the core network statistics and machine-learning pipeline entity or functionality uses the collected and preprocessed data of a target store entity or functionality according to the present invention.

Additionally, the present invention relates to a program comprising a computer readable program code which, when executed on a computer and/or on a user equipment and/or on a network node of a mobile communication network, especially realizing a core network data collection entity or functionality and/or a core network statistics and machine-learning pipeline entity or functionality, or in part on the user equipment and/or in part on a network node of a mobile communication network, especially realizing a core network data collection entity or functionality and/or a core network statistics and machine-learning pipeline entity or functionality, causes the computer and/or the user equipment and/or the network node of the mobile communication network, especially realizing a core network data collection entity or functionality and/or a core network statistics and machine-learning pipeline entity or functionality, to perform the inventive method.

Additionally, the present invention relates to a computer-readable medium comprising instructions which when executed on a computer and/or on a user equipment and/or on a network node of a mobile communication network, especially realizing a core network data collection entity or functionality and/or a core network statistics and machine-learning pipeline entity or functionality, or in part on the user equipment and/or in part on a network node of a mobile communication network, especially realizing a core network data collection entity or functionality and/or a core network statistics and machine-learning pipeline entity or functionality, causes the computer and/or the user equipment and/or the network node of the mobile communication network, especially realizing a core network data collection entity or functionality and/or a core network statistics and machine-learning pipeline entity or functionality, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network comprising an access network, a core network and a user equipment, wherein the core network typically comprises a number of network functions or services, inter alia a core network data collection entity or functionality and a core network statistics and machine-learning pipeline entity or functionality for realizing data collection and/or data analytics regarding artificial intelligence/machine-learning-usable data within the mobile communication network.
Figure 2 schematically illustrates the mobile communication network with a plurality of network functions or services and again the core network data collection entity or functionality and the core network statistics and machine-learning pipeline entity or functionality.
Figure 3 schematically illustrates an example of the typical tasks of the core network data collection entity or functionality and the core network statistics and machine-learning pipeline entity or functionality.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

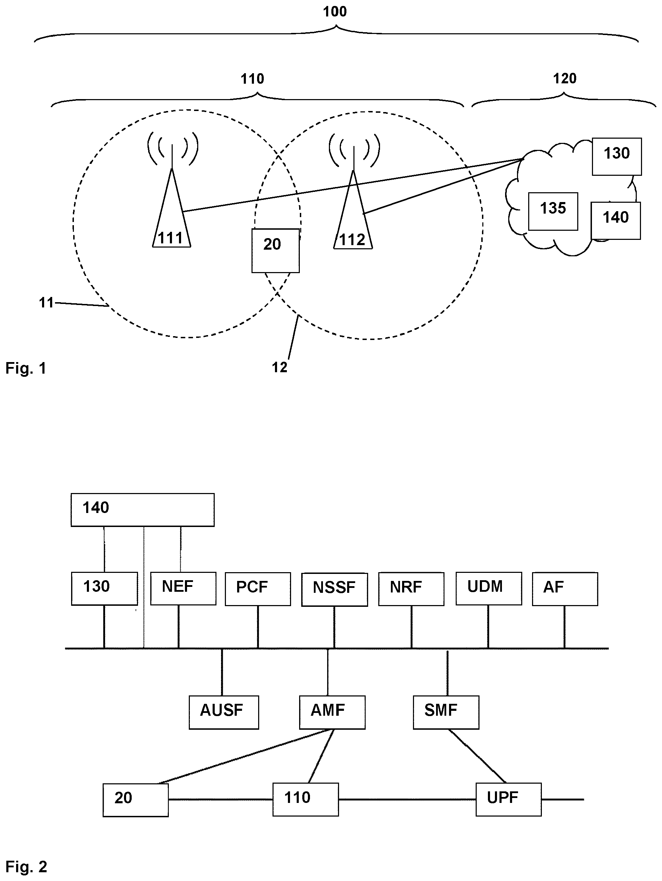

In Figure 1 a mobile communication network 100 comprising an access network 110, a core network 120 and a user equipment 20 is schematically illustrated.

The core network 120 typically comprises a number of network functions or services. Especially, Figure 1 schematically and exemplarily shows the core network 120 as comprising, inter alia, a core network data collection entity or functionality 130 and a core network statistics and machine-learning pipeline entity or functionality 140 for realizing data collection and/or data analytics regarding artificial intelligence/machine-learning-usable data within the mobile communication network 100. The core network data collection entity or functionality 130 might also be abbreviated as CNWDCE, and the core network statistics and machine-learning pipeline entity or functionality might also be abbreviated CNWSMLP.

The access network 110 comprises a plurality of radio cells 11, 12. In the exemplary situation or scenario shown in Figure 1, a first base station entity 111 generates (or, is associated with, or spans) the first radio cell 11, and a second base station entity 112 generates (or, is associated with or spans) the second radio cell 12. In the exemplary situation shown in Figure 1, the user equipment 20 is connected to the mobile communication network 100 via a radio interface to the first base station entity 111 and/or to the second base station entity 112. The user equipment 20 is typically, but not necessarily, mobile i.e. able to move with respect to the (typically, but not necessarily, static) radio cells 11, 12 or corresponding base station entities 111, 112 of the access network 110.

Typically (but not necessarily), the mobile communication network 100 - i.e. the access network 110 and/or the core network 120 - is connected to or comprises a machine-learning server entity (not explicitly shown in Figure 1).

In the exemplary situation or scenario represented in Figure 1, the core network data collection entity or functionality 130 and the core network statistics and machine-learning pipeline entity or functionality 140 are shown as being part of (or connected to) the core network 120. Especially, it might be the case (according to other embodiments of the present invention - not represented in Figure 1) that the core network data collection entity or functionality 130 and the core network statistics and machine-learning pipeline entity or functionality 140 is not part of the mobile communication network 100 or the core network 120 thereof but accessible by the mobile communication network or core network 120.

Generally according to the present invention, the core network data collection entity or functionality 130 is used for realizing data collection regarding artificial intelligence/machine-learning-usable data within the mobile communication network 100 (or in connection thereof) and from a plurality of data sources and/or using a plurality of data formats and collection procedures. The core network data collection entity or functionality 130 provides artificial intelligence/machine-learning usable data base content. According to the present invention, it is especially advantageous to use a target store entity or functionality 135 in order to store such data base content.

Also generally according to the present invention, the core network statistics and machine-learning pipeline entity or functionality 140 is used for realizing data analytics regarding artificial intelligence/machine-learning-usable data within the mobile communication network 100 (or in connection thereof) and from a plurality of data sources and/or using a plurality of data formats and collection procedures.

Advantageously according to the present invention, the core network statistics and machine-learning pipeline entity or functionality 140 is able to use such data base content of the target store entity or functionality 135. However, not only the core network statistics and machine-learning pipeline entity or functionality 140 but advantageously also other network functions or services of the mobile communication network 100 or of the core network 120 are able to use such data base content of the target store entity or functionality 135.

In order to realize data collection and/or data analytics regarding artificial intelligence/machine-learning-usable data within the mobile communication network 100, in a first step, data collection is performed using a plurality of data sources and/or a plurality of data formats and using a plurality of data collection procedures, and, in a second step, the collected data are preprocessed and provided as artificial intelligence/machine-learning-usable data in a target store entity or functionality 135. In a third step, the core network statistics and machine-learning pipeline entity or functionality 140 uses the collected and preprocessed data of the target store entity or functionality 135.

Figure 2 schematically illustrates the mobile communication network 100 with a plurality of network functions or services (not specifically indicated by means of reference signs) and the core network data collection entity or functionality 130 and the core network statistics and machine-learning pipeline entity or functionality 140. The mobile communication network 100 comprises, as also shown in Figure 1, the radio access network 110 and the user equipment 20 (or a user equipment 20; typically, the mobile communication network 100 comprises, or communicates with or serves, a plurality of user equipments; however, for the sake of simplicity, only user equipment 20 is represented in Figure 2).

Furthermore, the mobile communication network 100 - or, rather, the core network 120 of the mobile communication network 100 - is schematically shown as comprising - besides the core network data collection entity or functionality 130 and the core network statistics and machine-learning pipeline entity or functionality 140 - a plurality of network functions or services; these network functions or services especially comprise: a user plane function UPF, a session management function SMF, an access and mobility management function AMF, an authentication server function AUSF. Furthermore, the mobile communication network 100 or its core network 120 comprises an application function AF, a unified data management UDM, a network repository function NRF, a network slice selection function NSSF, a policy and charging function PCF, and a network exposure function NEF. Preferably, both the core network data collection entity or functionality 130 and the network exposure function NEF are connected to the core network statistics and machine-learning pipeline entity or functionality 140.

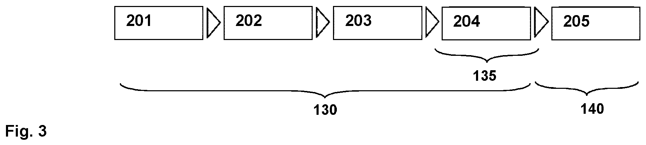

Figure 3 schematically illustrates an example of the typical tasks of the core network data collection entity or functionality 130 and the core network statistics and machine-learning pipeline entity or functionality 140:
In a first processing step 201, a plurality of data sources are considered; such data sources especially include at least one out of the following but preferably a plurality out of the following:
   -- the user equipment 20, or data provided by or originating from the user equipment 20,
   -- the access network or radio access network 110, or data provided by or originating from the access network or radio access network 110,
   -- the user equipment 20, or data provided by or originating from the user equipment 20,
   -- the core network 120, or data provided by or originating from the core network 120,
   -- an application or applications that is/are running on the user equipment 20 (i.e. the user equipment 20 typically runs or executes an operating system (such as a mobile (devices) operating system, e.g., android, iOS, iPadOS, etc.), and the application or appliations is/are running on the operating system), or data provided by or originating from such an application or such applications,
   -- operations and maintenance analytics, or data provided by or originating from such operations and maintenance analytics,
   -- a cloud or cloud infrastructure, or data provided by or originating from such a cloud or cloud infrastructure.
In a second processing step 202, data collection is performed, especially using at least one out of the following (data) collection procedures:
   -- service-based architecture-related collection procedures, especially using a service-based interface and/or service-based interface data from protocols,
   -- proprietary event data or protocols from suppliers, especially using internet protocol flow information export, IPFIX,
   -- all transferred account procedures, TAP, proprietary data from suppliers,
   -- proprietary cloud observability data,
   -- application programming interfaces.
In a third processing step 203, preprocessing (of collected data) is realized, wherein such preprocessing of the collected data (providing such data as artificial intelligence/machine-learning-usable data and/or as statistics-usable data) especially involves at least one out of the following:
   -- cleaning of the collected data or of at least part thereof,
   -- integrating the collected data or at least part thereof,
   -- transforming the collected data or at least part thereof,
   -- normalizing the collected data or at least part thereof,
   -- feature engineering regarding the collected data or at least part thereof.
   In this respect, feature engineering means that data are converted into so-called features (calculations from the raw data, e.g. key performance indicators (KPIs) or enrichment of the raw data and resulting calculations); the purpose thereof being to decouple data collection and analysis; in currently known mobile communication networks (especially 5G systems), this is configured rather fixedly, and the options for operators to easily configure new use cases and/or use their own analytics components that use raw data is rather limited.
In a fourth processing step 204, the collected data, that, especially, correspond to preprocessed data are provided to the target store entity or functionality 135. The target store entity or functionality 135 especially comprises, or corresponds to, an SQL database (structured query language database) and/or comprises, or corresponds to, a NoSQL database (not only SQL database) and/or comprises, or corresponds to, a big data database.
In a fifth processing step 205, the collected and, especially, preprocessed data that are stored in the target store entity or functionality 135 are used by the core network statistics and machine-learning pipeline entity or functionality 140, especially using one or a plurality of statistics pipelines and/or one or a plurality of artificial intelligence/machine-learning pipelines. This at least one statistics pipeline and/or artificial intelligence/machine-learning pipeline especially performs and/or provides analytics based on the collected data.

Especially according to the present invention, the CNWDCE or core network data collection entity or functionality 130 can be instantiated per data type but can also work as a central network function (or network function or service); this especially depends on operator policies and requirements. According to the present invention, this function offers a solid and high quality data access for its consumers (i.e. consumer entities using elements of the target store entity or functionality). Among such consumers, especially the CNWSMLP or core network statistics and machine-learning pipeline entity or functionality 140 is to be mentioned; however, other operator consumers (i.e. network nodes or entities within the mobile communication network 100) or even external consumers (e.g. via network exposure function NEF) might be able to access such data.

According to a preferred embodiment of the present invention, the core network statistics and machine-learning pipeline entity or functionality 140 (CNWSMLP) is an application function which can be supplier-provided but also provided by the mobile communication network 100 (i.e. inhouse developed); alternatively, it is able to be provided by a hyperscaler cloud (cloud infrastructure provider), e.g. as platform-as-a-service (PaaS) and/or software-as-a-service (SaaS). It is, thus, up to a decision within the mobile communication network 100 how to utilize the function core network statistics and machine-learning pipeline entity or functionality 140.

The core network statistics and machine-learning pipeline entity or functionality 140 mainly (refer to Figure 2) provides analytics pipelines based on software products that are available to the operator of the mobile communication network 100. It therefore disaggegates the network data analytics function NWDAF (specified in 3GPP) from analytics pipelines. These analytics pipelines (regarding statistics but also regarding artificial intelligence/machine-learning) typically provide all functions that are relevant for statistics and/or artificial intelligence/machine-learning operations (OPS) - i.e. MLOPS-relevant functions. Such analytics pipelines can be provided either by the mobile communication network 100, or per a supplier or from third party programmers if allowed; preferably, these are provided per API for specific optimizations relevant and/or applicable within the mobile communication network 100 (i.e. with telecommunications-specific optimizations).

## Claims

1. Method for realizing data collection and/or data analytics regarding artificial intelligence/machine-learning-usable data within a mobile communication network (100) and from a plurality of data sources and/or using a plurality of data formats and collection procedures, wherein the mobile communication network (100) comprises, or is associated with or assigned to a radio access network (110), and wherein the mobile communication network (100) also comprises a core network (120), **characterized in that**,
the mobile communication network (100), especially the core network (120), comprises a core network data collection entity or functionality (130) and a core network statistics and machine-learning pipeline entity or functionality (140), the core network data collection entity or functionality (130) providing artificial intelligence/machine-learning-usable data base content, especially to the core network statistics and machine-learning pipeline entity or functionality (140), wherein, in order to realize data collection and/or data analytics regarding artificial intelligence/machine-learning-usable data within the mobile communication network (100), the method comprises the following steps:
-- in a first step, data collection is performed using a plurality of data sources and/or a plurality of data formats and using a plurality of data collection procedures,
-- in a second step, the collected data are preprocessed and provided as artificial intelligence/machine-learning-usable data in a target store entity or functionality (135),
-- in a third step, the core network statistics and machine-learning pipeline entity or functionality (140) uses the collected and preprocessed data of the target store entity or functionality (135).

2. Method according to claim 1, wherein the core network statistics and machine-learning pipeline entity or functionality (140) and/or external consumers via network exposure function use/uses the collected and preprocessed data of the target store entity or functionality (135) in view of at least one statistics pipeline and/or at least one artificial intelligence/machine-learning pipeline.

3. Method according to one of the preceding claims, wherein preprocessing the collected data and providing such data as artificial intelligence/machine-learning-usable data involves at least one out of the following:
-- cleaning of the collected data or of at least part thereof,
-- integrating the collected data or at least part thereof,
-- transforming the collected data or at least part thereof,
-- normalizing the collected data or at least part thereof,
-- feature engineering regarding the collected data or at least part thereof.

4. Method according to one of the preceding claims, wherein at least one out of the following data sources and/or data formats are used in view of performing data collection:
-- data from a plurality of user equipments and/or regarding a plurality of user equipments,
-- data from the access network and/or the radio access network (110),
-- data from the core network (120),
-- data from applications, especially applications that run on, or are executed on or by, user equipments,
-- data generated by and/or obtained from operations and maintenance analytics,
-- data generated by and/or obtained from a cloud.

5. Method according to one of the preceding claims, wherein at least one out of the following collection procedures are used:
-- service-based architecture-related collection procedures, especially using a service-based interface and/or service-based interface data from protocols,
-- proprietary event data or protocols from suppliers, especially using internet protocol flow information export, IPFIX,
-- all transferred account procedures, TAP, proprietary data from suppliers,
-- proprietary cloud observability data,
-- application programming interfaces.

6. Method according to one of the preceding claims, wherein the core network data collection entity or functionality (130) is instantiated per data type or as a central network function.

7. Mobile communication network (100) for realizing data collection and/or data analytics regarding artificial intelligence/machine-learning-usable data within the mobile communication network (100) and from a plurality of data sources and/or using a plurality of data formats and collection procedures, wherein the mobile communication network (100) comprises, or is associated with or assigned to a radio access network (110), and wherein the mobile communication network (100) also comprises a core network (120), **characterized in that**, the mobile communication network (100), especially the core network (120), comprises a core network data collection entity or functionality (130) and a core network statistics and machine-learning pipeline entity or functionality (140), the core network data collection entity or functionality (130) providing artificial intelligence/machine-learning-usable data base content, especially to the core network statistics and machine-learning pipeline entity or functionality (140), wherein, in order to realize data collection and/or data analytics regarding artificial intelligence/machine-learning-usable data within the mobile communication network (100), the mobile communication network (100) is configured such that:
-- data collection is performed using a plurality of data sources and/or a plurality of data formats and using a plurality of data collection procedures,
-- the collected data are preprocessed and provided as artificial intelligence/machine-learning-usable data in a target store entity or functionality (135),
-- the core network statistics and machine-learning pipeline entity or functionality (140) uses the collected and preprocessed data of the target store entity or functionality (135).

8. Core network data collection entity or functionality (130) for realizing data collection regarding artificial intelligence/machine-learning-usable data within a mobile communication network (100) according to claim 7 and from a plurality of data sources and/or using a plurality of data formats and collection procedures, wherein the core network data collection entity or functionality (130) is part of the mobile communication network (100) according to claim 7,
wherein the core network data collection entity or functionality (130) provides artificial intelligence/machine-learning-usable data base content, especially to a core network statistics and machine-learning pipeline entity or functionality (140) according to claim 9,
wherein, in order to realize data collection regarding artificial intelligence/machine-learning-usable data within the mobile communication network (100) according to claim 7, the core network data collection entity or functionality (130) is configured such that:
-- data collection is performed using a plurality of data sources and/or a plurality of data formats and using a plurality of data collection procedures,
-- the collected data are preprocessed and provided as artificial intelligence/machine-learning-usable data in a target store entity or functionality (135).

9. Core network statistics and machine-learning pipeline entity or functionality (140) for realizing data analytics regarding artificial intelligence/machine-learning-usable data within a mobile communication network (100) according to claim 7, wherein the core network statistics and machine-learning pipeline entity or functionality is part of the mobile communication network (100) according to claim 7, wherein a core network data collection entity or functionality (130) according to claim 8 provides artificial intelligence/machine-learning-usable data base content to the core network statistics and machine-learning pipeline entity or functionality (140), wherein, in order to realize data analytics regarding artificial intelligence/machine-learning-usable data within the mobile communication network (100) according to claim 7, the core network statistics and machine-learning pipeline entity or functionality (140) is configured such that:
-- the core network statistics and machine-learning pipeline entity or functionality (140) uses the collected and preprocessed data of a target store entity or functionality (135) according to one of claims 7 or 8.

10. Program comprising a computer readable program code which, when executed on a computer and/or on a user equipment (20) and/or on a network node of a mobile communication network (100), especially realizing a core network data collection entity or functionality (130) and/or a core network statistics and machine-learning pipeline entity or functionality (140), or in part on the user equipment (20) and/or in part on a network node of a mobile communication network (100), especially realizing a core network data collection entity or functionality (130) and/or a core network statistics and machine-learning pipeline entity or functionality (140), causes the computer and/or the user equipment (20) and/or the network node of the mobile communication network (100), especially realizing a core network data collection entity or functionality (130) and/or a core network statistics and machine-learning pipeline entity or functionality (140), to perform a method according one of claims 1 to 6.

11. Computer-readable medium comprising instructions which when executed on a computer and/or on a user equipment (20) and/or on a network node of a mobile communication network (100), especially realizing a core network data collection entity or functionality (130) and/or a core network statistics and machine-learning pipeline entity or functionality (140), or in part on the user equipment (20) and/or in part on a network node of a mobile communication network (100), especially realizing a core network data collection entity or functionality (130) and/or a core network statistics and machine-learning pipeline entity or functionality (140), causes the computer and/or the user equipment (20) and/or the network node of the mobile communication network (100), especially realizing a core network data collection entity or functionality (130) and/or a core network statistics and machine-learning pipeline entity or functionality (140), to perform a method according one of claims 1 to 6.

## Patentansprüche

1. Verfahren zur Realisierung von Datenerfassung und/oder Datenanalyse betreffend für künstliche Intelligenz/maschinelles Lernen nutzbare Daten innerhalb eines Mobilkommunikationsnetzes (100) und aus einer Mehrzahl von Datenquellen und/oder unter Verwendung einer Mehrzahl von Datenformaten und Erfassungsverfahren, wobei das Mobilkommunikationsnetz (100) ein Funkzugangsnetz (110) umfasst oder diesem zugeordnet oder zugewiesen ist, und wobei das Mobilkommunikationsnetz (100) ferner ein Kernnetz (120) umfasst, **dadurch gekennzeichnet, dass** das Mobilkommunikationsnetz (100), insbesondere das Kernnetz (120), eine Kernnetz-Datenerfassungseinheit oder -funktionalität (130) und eine Kernnetz-Statistik- und Maschinenlern-Pipeline-Einheit oder -Funktionalität (140) umfasst, wobei die Kernnetz-Datenerfassungseinheit oder -funktionalität (130) für künstliche Intelligenz/maschinelles Lernen nutzbare Datenbankinhalte bereitstellt, insbesondere der Kernnetz-Statistik- und Maschinenlern-Pipeline-Einheit oder -Funktionalität (140), wobei das Verfahren, um Datenerfassung und/oder Datenanalyse betreffend für künstliche Intelligenz/maschinelles Lernen nutzbare Daten innerhalb des Mobilkommunikationsnetzes (100) zu realisieren, die folgenden Schritte umfasst:
-- in einem ersten Schritt wird eine Datenerfassung unter Verwendung einer Mehrzahl von Datenquellen und/oder einer Mehrzahl von Datenformaten und unter Verwendung einer Mehrzahl von Datenerfassungsverfahren durchgeführt,
-- in einem zweiten Schritt werden die erfassten Daten vorverarbeitet und als für künstliche Intelligenz/maschinelles Lernen nutzbare Daten in einer Zielspeichereinheit oder -funktionalität (135) bereitgestellt,
-- in einem dritten Schritt verwendet die Kernnetz-Statistik- und Maschinenlern-Pipeline-Einheit oder -Funktionalität (140) die erfassten und vorverarbeiteten Daten der Zielspeichereinheit oder -funktionalität (135).

2. Verfahren nach Anspruch 1, wobei die Kernnetz-Statistik- und Maschinenlern-Pipeline-Einheit oder -Funktionalität (140) und/oder externe Konsumenten über eine Netzwerk-Exposure-Funktion die erfassten und vorverarbeiteten Daten der Zielspeichereinheit oder -funktionalität (135) im Hinblick auf mindestens eine Statistik-Pipeline und/oder mindestens eine Pipeline für künstliche Intelligenz/maschinelles Lernen verwendet bzw. verwenden.

3. Verfahren nach einem der vorhergehenden Ansprüche, wobei das Vorverarbeiten der erfassten Daten und das Bereitstellen dieser Daten als für künstliche Intelligenz/maschinelles Lernen nutzbare Daten mindestens eines der Folgenden beinhalten:
-- Bereinigung der erfassten Daten oder zumindest eines Teils davon,
-- Integration der erfassten Daten oder zumindest eines Teils davon,
-- Transformation der erfassten Daten oder zumindest eines Teils davon,
-- Normalisierung der erfassten Daten oder zumindest eines Teils davon,
-- Feature-Engineering betreffend die erfassten Daten oder zumindest einen Teil davon.

4. Verfahren nach einem der vorhergehenden Ansprüche, wobei im Hinblick auf die Durchführung der Datenerfassung mindestens eine der folgenden Datenquellen und/oder mindestens eines der folgenden Datenformate verwendet wird bzw. werden:
-- Daten von einer Mehrzahl von Benutzergeräten und/oder betreffend eine Mehrzahl von Benutzergeräten,
-- Daten aus dem Zugangsnetz und/oder dem Funkzugangsnetz (110),
-- Daten aus dem Kernnetz (120),
-- Daten von Anwendungen, insbesondere Anwendungen, die auf Benutzergeräten laufen oder auf oder von diesen ausgeführt werden,
-- Daten, die durch Betriebs- und Wartungsanalytik erzeugt und/oder daraus gewonnen werden,
-- Daten, die durch eine Cloud erzeugt und/oder daraus gewonnen werden.

5. Verfahren nach einem der vorhergehenden Ansprüche, wobei mindestens eines der folgenden Erfassungsverfahren verwendet wird:
-- Erfassungsverfahren im Zusammenhang mit einer dienstbasierten Architektur, insbesondere unter Verwendung einer dienstbasierten Schnittstelle und/oder von Daten einer dienstbasierten Schnittstelle aus Protokollen,
-- proprietäre Ereignisdaten oder Protokolle von Lieferanten, insbesondere unter Verwendung des Internetprotokoll-Flussinformationsexports, IPFIX,
-- sämtliche Transferred Account Procedures, TAP, proprietäre Daten von Lieferanten,
-- proprietäre Cloud-Observability-Daten,
-- Anwendungsprogrammierschnittstellen.

6. Verfahren nach einem der vorhergehenden Ansprüche, wobei die Kernnetz-Datenerfassungseinheit oder -funktionalität (130) pro Datentyp oder als zentrale Netzwerkfunktion instanziiert wird.

7. Mobilkommunikationsnetz (100) zur Realisierung von Datenerfassung und/oder Datenanalyse betreffend für künstliche Intelligenz/maschinelles Lernen nutzbare Daten innerhalb des Mobilkommunikationsnetzes (100) und aus einer Mehrzahl von Datenquellen und/oder unter Verwendung einer Mehrzahl von Datenformaten und Erfassungsverfahren, wobei das Mobilkommunikationsnetz (100) ein Funkzugangsnetz (110) umfasst oder diesem zugeordnet oder zugewiesen ist, und wobei das Mobilkommunikationsnetz (100) ferner ein Kernnetz (120) umfasst, **dadurch gekennzeichnet, dass** das Mobilkommunikationsnetz (100), insbesondere das Kernnetz (120), eine Kernnetz-Datenerfassungseinheit oder -funktionalität (130) und eine Kernnetz-Statistik- und Maschinenlern-Pipeline-Einheit oder -Funktionalität (140) umfasst, wobei die Kernnetz-Datenerfassungseinheit oder -funktionalität (130) für künstliche Intelligenz/maschinelles Lernen nutzbare Datenbankinhalte für künstliche Intelligenz/maschinelles Lernen bereitstellt, insbesondere der Kernnetz-Statistik- und Maschinenlern-Pipeline-Einheit oder -Funktionalität (140), wobei das Mobilkommunikationsnetz (100), um Datenerfassung und/oder Datenanalyse betreffend für künstliche Intelligenz/maschinelles Lernen nutzbare Daten innerhalb des Mobilkommunikationsnetzes (100) zu realisieren, derart konfiguriert ist, dass:
-- eine Datenerfassung unter Verwendung einer Mehrzahl von Datenquellen und/oder einer Mehrzahl von Datenformaten und unter Verwendung einer Mehrzahl von Datenerfassungsverfahren durchgeführt wird,
-- die erfassten Daten vorverarbeitet und als für künstliche Intelligenz/maschinelles Lernen nutzbare Daten in einer Zielspeichereinheit oder -funktionalität (135) bereitgestellt werden,
-- die Kernnetz-Statistik- und Maschinenlern-Pipeline-Einheit oder -Funktionalität (140) die erfassten und vorverarbeiteten Daten der Zielspeichereinheit oder -funktionalität (135) verwendet.

8. Kernnetz-Datenerfassungseinheit oder -funktionalität (130) zur Realisierung von Datenerfassung betreffend für künstliche Intelligenz/maschinelles Lernen nutzbare Daten innerhalb eines Mobilkommunikationsnetzes (100) nach Anspruch 7 und aus einer Mehrzahl von Datenquellen und/oder unter Verwendung einer Mehrzahl von Datenformaten und Erfassungsverfahren, wobei die Kernnetz-Datenerfassungseinheit oder -funktionalität (130) Teil des Mobilkommunikationsnetzes (100) nach Anspruch 7 ist, wobei die Kernnetz-Datenerfassungseinheit oder -funktionalität (130) für künstliche Intelligenz/maschinelles Lernen nutzbare Datenbankinhalte bereitstellt, insbesondere einer Kernnetz-Statistik- und Maschinenlern-Pipeline-Einheit oder -Funktionalität (140) nach Anspruch 9, wobei die Kernnetz-Datenerfassungseinheit oder -funktionalität (130), um Datenerfassung betreffend für künstliche Intelligenz/maschinelles Lernen nutzbare Daten innerhalb des Mobilkommunikationsnetzes (100) nach Anspruch 7 zu realisieren, derart konfiguriert ist, dass:
-- eine Datenerfassung unter Verwendung einer Mehrzahl von Datenquellen und/oder einer Mehrzahl von Datenformaten und unter Verwendung einer Mehrzahl von Datenerfassungsverfahren durchgeführt wird,
-- die erfassten Daten vorverarbeitet und als für künstliche Intelligenz/maschinelles Lernen nutzbare Daten in einer Zielspeichereinheit oder -funktionalität (135) bereitgestellt werden.

9. Kernnetz-Statistik- und Maschinenlern-Pipeline-Einheit oder -Funktionalität (140) zur Realisierung von Datenanalyse betreffend für künstliche Intelligenz/maschinelles Lernen nutzbare Daten innerhalb eines Mobilkommunikationsnetzes (100) nach Anspruch 7, wobei die Kernnetz-Statistik- und Maschinenlern-Pipeline-Einheit oder -Funktionalität Teil des Mobilkommunikationsnetzes (100) nach Anspruch 7 ist, wobei eine Kernnetz-Datenerfassungseinheit oder -funktionalität (130) nach Anspruch 8 für künstliche Intelligenz/maschinelles Lernen nutzbare Datenbankinhalte der Kernnetz-Statistik- und Maschinenlern-Pipeline-Einheit oder -Funktionalität (140) bereitstellt, wobei die Kernnetz-Statistik- und Maschinenlern-Pipeline-Einheit oder -Funktionalität (140), um Datenanalyse betreffend für künstliche Intelligenz/maschinelles Lernen nutzbare Daten innerhalb des Mobilkommunikationsnetzes (100) nach Anspruch 7 zu realisieren, derart konfiguriert ist, dass:
-- die Kernnetz-Statistik- und Maschinenlern-Pipeline-Einheit oder -Funktionalität (140) die erfassten und vorverarbeiteten Daten einer Zielspeichereinheit oder -funktionalität (135) nach einem der Ansprüche 7 oder 8 verwendet.

10. Programm, umfassend einen computerlesbaren Programmcode, der, wenn er auf einem Computer und/oder auf einem Benutzergerät (20) und/oder auf einem Netzwerkknoten eines Mobilkommunikationsnetzes (100), der insbesondere eine Kernnetz-Datenerfassungseinheit oder -funktionalität (130) und/oder eine Kernnetz-Statistik- und Maschinenlern-Pipeline-Einheit oder -Funktionalität (140) realisiert, oder teilweise auf dem Benutzergerät (20) und/oder teilweise auf einem Netzwerkknoten eines Mobilkommunikationsnetzes (100), der insbesondere eine Kernnetz-Datenerfassungseinheit oder -funktionalität (130) und/oder eine Kernnetz-Statistik- und Maschinenlern-Pipeline-Einheit oder -Funktionalität (140) realisiert, ausgeführt wird, bewirkt, dass der Computer und/oder das Benutzergerät (20) und/oder der Netzwerkknoten des Mobilkommunikationsnetzes (100), der insbesondere eine Kernnetz-Datenerfassungseinheit oder -funktionalität (130) und/oder eine Kernnetz-Statistik- und Maschinenlern-Pipeline-Einheit oder -Funktionalität (140) realisiert, ein Verfahren nach einem der Ansprüche 1 bis 6 durchführt.

11. Computerlesbares Medium, umfassend Anweisungen, die, wenn sie auf einem Computer und/oder auf einem Benutzergerät (20) und/oder auf einem Netzwerkknoten eines Mobilkommunikationsnetzes (100), der insbesondere eine Kernnetz-Datenerfassungseinheit oder -funktionalität (130) und/oder eine Kernnetz-Statistik- und Maschinenlern-Pipeline-Einheit oder -Funktionalität (140) realisiert, oder teilweise auf dem Benutzergerät (20) und/oder teilweise auf einem Netzwerkknoten eines Mobilkommunikationsnetzes (100), der insbesondere eine Kernnetz-Datenerfassungseinheit oder -funktionalität (130) und/oder eine Kernnetz-Statistik- und Maschinenlern-Pipeline-Einheit oder -Funktionalität (140) realisiert, ausgeführt werden, bewirken, dass der Computer und/oder das Benutzergerät (20) und/oder der Netzwerkknoten des Mobilkommunikationsnetzes (100), der insbesondere eine Kernnetz-Datenerfassungseinheit oder -funktionalität (130) und/oder eine Kernnetz-Statistik- und Maschinenlern-Pipeline-Einheit oder -Funktionalität (140) realisiert, ein Verfahren nach einem der Ansprüche 1 bis 6 durchführt.

## Revendications

1. Procédé de réalisation d'une collecte de données et/ou d'une analyse de données concernant des données utilisables par l'intelligence artificielle/l'apprentissage automatique au sein d'un réseau de communication mobile (100) et provenant d'une pluralité de sources de données et/ou utilisant une pluralité de formats de données et de procédures de collecte, le réseau de communication mobile (100) comprenant, ou étant associé ou affecté à, un réseau d'accès radio (110), et le réseau de communication mobile (100) comprenant en outre un réseau central (120), **caractérisé en ce que** le réseau de communication mobile (100), en particulier le réseau central (120), comprend une entité ou fonctionnalité de collecte de données du réseau central (130) et une entité ou fonctionnalité de pipeline de statistiques et d'apprentissage automatique du réseau central (140), l'entité ou fonctionnalité de collecte de données du réseau central (130) fournissant un contenu de base de données utilisable par l'intelligence artificielle/l'apprentissage automatique, en particulier à l'entité ou fonctionnalité de pipeline de statistiques et d'apprentissage automatique du réseau central (140), dans lequel, afin de réaliser une collecte de données et/ou une analyse de données concernant des données utilisables par l'intelligence artificielle/l'apprentissage automatique au sein du réseau de communication mobile (100), le procédé comprend les étapes suivantes :
-- dans une première étape, une collecte de données est effectuée en utilisant une pluralité de sources de données et/ou une pluralité de formats de données et en utilisant une pluralité de procédures de collecte de données,
-- dans une deuxième étape, les données collectées sont prétraitées et fournies sous forme de données utilisables par l'intelligence artificielle/l'apprentissage automatique dans une entité ou fonctionnalité de stockage cible (135),
-- dans une troisième étape, l'entité ou fonctionnalité de pipeline de statistiques et d'apprentissage automatique du réseau central (140) utilise les données collectées et prétraitées de l'entité ou fonctionnalité de stockage cible (135).

2. Procédé selon la revendication 1, dans lequel l'entité ou fonctionnalité de pipeline de statistiques et d'apprentissage automatique du réseau central (140) et/ou des consommateurs externes, via une fonction d'exposition réseau, utilise/utilisent les données collectées et prétraitées de l'entité ou fonctionnalité de stockage cible (135) en vue d'au moins un pipeline de statistiques et/ou d'au moins un pipeline d'intelligence artificielle/d'apprentissage automatique.

3. Procédé selon l'une des revendications précédentes, dans lequel le prétraitement des données collectées et la fourniture de ces données sous forme de données utilisables par l'intelligence artificielle/l'apprentissage automatique impliquent au moins l'un des éléments suivants :
-- le nettoyage des données collectées ou d'au moins une partie de celles-ci,
-- l'intégration des données collectées ou d'au moins une partie de celles-ci,
-- la transformation des données collectées ou d'au moins une partie de celles-ci,
-- la normalisation des données collectées ou d'au moins une partie de celles-ci,
-- l'ingénierie des caractéristiques concernant les données collectées ou au moins une partie de celles-ci.

4. Procédé selon l'une des revendications précédentes, dans lequel au moins l'une des sources de données suivantes et/ou l'un des formats de données suivants est/sont utilisé(s) en vue d'effectuer la collecte de données :
-- des données provenant d'une pluralité d'équipements utilisateurs et/ou concernant une pluralité d'équipements utilisateurs,
-- des données provenant du réseau d'accès et/ou du réseau d'accès radio (110),
-- des données provenant du réseau central (120),
-- des données provenant d'applications, en particulier des applications s'exécutant sur, ou étant exécutées sur ou par, des équipements utilisateurs,
-- des données générées par et/ou obtenues à partir d'une analyse d'exploitation et de maintenance,
-- des données générées par et/ou obtenues à partir d'un cloud.

5. Procédé selon l'une des revendications précédentes, dans lequel au moins l'une des procédures de collecte suivantes est utilisée :
-- des procédures de collecte liées à une architecture basée sur les services, en particulier utilisant une interface basée sur les services et/ou des données d'interface basée sur les services provenant de protocoles,
-- des données d'événements propriétaires ou des protocoles provenant de fournisseurs, en particulier utilisant l'export d'informations de flux de protocole internet, IPFIX,
-- toutes les procédures de compte transféré, TAP, des données propriétaires provenant de fournisseurs,
-- des données propriétaires d'observabilité cloud,
-- des interfaces de programmation d'application.

6. Procédé selon l'une des revendications précédentes, dans lequel l'entité ou fonctionnalité de collecte de données du réseau central (130) est instanciée par type de données ou en tant que fonction réseau centrale.

7. Réseau de communication mobile (100) pour la réalisation d'une collecte de données et/ou d'une analyse de données concernant des données utilisables par l'intelligence artificielle/l'apprentissage automatique au sein du réseau de communication mobile (100) et provenant d'une pluralité de sources de données et/ou utilisant une pluralité de formats de données et de procédures de collecte, le réseau de communication mobile (100) comprenant, ou étant associé ou affecté à, un réseau d'accès radio (110), et le réseau de communication mobile (100) comprenant en outre un réseau central (120), **caractérisé en ce que** le réseau de communication mobile (100), en particulier le réseau central (120), comprend une entité ou fonctionnalité de collecte de données du réseau central (130) et une entité ou fonctionnalité de pipeline de statistiques et d'apprentissage automatique du réseau central (140), l'entité ou fonctionnalité de collecte de données du réseau central (130) fournissant un contenu de base de données utilisable par l'intelligence artificielle/d'apprentissage automatique, en particulier à l'entité ou fonctionnalité de pipeline de statistiques et d'apprentissage automatique du réseau central (140), dans lequel, afin de réaliser une collecte de données et/ou une analyse de données concernant des données utilisables par l'intelligence artificielle/l'apprentissage automatique au sein du réseau de communication mobile (100), le réseau de communication mobile (100) est configuré de telle sorte que :
-- une collecte de données est effectuée en utilisant une pluralité de sources de données et/ou une pluralité de formats de données et en utilisant une pluralité de procédures de collecte de données,
-- les données collectées sont prétraitées et fournies sous forme de données utilisables par l'intelligence artificielle/l'apprentissage automatique dans une entité ou fonctionnalité de stockage cible (135),
-- l'entité ou fonctionnalité de pipeline de statistiques et d'apprentissage automatique du réseau central (140) utilise les données collectées et prétraitées de l'entité ou fonctionnalité de stockage cible (135).

8. Entité ou fonctionnalité de collecte de données du réseau central (130) pour la réalisation d'une collecte de données concernant des données utilisables par l'intelligence artificielle/l'apprentissage automatique au sein d'un réseau de communication mobile (100) selon la revendication 7 et provenant d'une pluralité de sources de données et/ou utilisant une pluralité de formats de données et de procédures de collecte, l'entité ou fonctionnalité de collecte de données du réseau central (130) faisant partie du réseau de communication mobile (100) selon la revendication 7, dans laquelle l'entité ou fonctionnalité de collecte de données du réseau central (130) fournit un contenu de base de données utilisable par l'intelligence artificielle/l'apprentissage automatique, en particulier à une entité ou fonctionnalité de pipeline de statistiques et d'apprentissage automatique du réseau central (140) selon la revendication 9, dans laquelle, afin de réaliser une collecte de données concernant des données utilisables par l'intelligence artificielle/l'apprentissage automatique au sein du réseau de communication mobile (100) selon la revendication 7, l'entité ou fonctionnalité de collecte de données du réseau central (130) est configurée de telle sorte que :
-- une collecte de données est effectuée en utilisant une pluralité de sources de données et/ou une pluralité de formats de données et en utilisant une pluralité de procédures de collecte de données,
-- les données collectées sont prétraitées et fournies sous forme de données utilisables par l'intelligence artificielle/l'apprentissage automatique dans une entité ou fonctionnalité de stockage cible (135).

9. Entité ou fonctionnalité de pipeline de statistiques et d'apprentissage automatique du réseau central (140) pour la réalisation d'une analyse de données concernant des données utilisables par l'intelligence artificielle/l'apprentissage automatique au sein d'un réseau de communication mobile (100) selon la revendication 7, l'entité ou fonctionnalité de pipeline de statistiques et d'apprentissage automatique du réseau central faisant partie du réseau de communication mobile (100) selon la revendication 7, dans laquelle une entité ou fonctionnalité de collecte de données du réseau central (130) selon la revendication 8 fournit un contenu de base de données utilisable par l'intelligence artificielle/l'apprentissage automatique à l'entité ou fonctionnalité de pipeline de statistiques et d'apprentissage automatique du réseau central (140), dans laquelle, afin de réaliser une analyse de données concernant des données utilisables par l'intelligence artificielle/l'apprentissage automatique au sein du réseau de communication mobile (100) selon la revendication 7, l'entité ou fonctionnalité de pipeline de statistiques et d'apprentissage automatique du réseau central (140) est configurée de telle sorte que :
-- l'entité ou fonctionnalité de pipeline de statistiques et d'apprentissage automatique du réseau central (140) utilise les données collectées et prétraitées d'une entité ou fonctionnalité de stockage cible (135) selon l'une des revendications 7 ou 8.

10. Programme comprenant un code de programme lisible par ordinateur qui, lorsqu'il est exécuté sur un ordinateur et/ou sur un équipement utilisateur (20) et/ou sur un nœud de réseau d'un réseau de communication mobile (100), réalisant en particulier une entité ou fonctionnalité de collecte de données du réseau central (130) et/ou une entité ou fonctionnalité de pipeline de statistiques et d'apprentissage automatique du réseau central (140), ou en partie sur l'équipement utilisateur (20) et/ou en partie sur un nœud de réseau d'un réseau de communication mobile (100), réalisant en particulier une entité ou fonctionnalité de collecte de données du réseau central (130) et/ou une entité ou fonctionnalité de pipeline de statistiques et d'apprentissage automatique du réseau central (140), amène l'ordinateur et/ou l'équipement utilisateur (20) et/ou le nœud de réseau du réseau de communication mobile (100), réalisant en particulier une entité ou fonctionnalité de collecte de données du réseau central (130) et/ou une entité ou fonctionnalité de pipeline de statistiques et d'apprentissage automatique du réseau central (140), à exécuter un procédé selon l'une des revendications 1 à 6.

11. Support lisible par ordinateur comprenant des instructions qui, lorsqu'elles sont exécutées sur un ordinateur et/ou sur un équipement utilisateur (20) et/ou sur un nœud de réseau d'un réseau de communication mobile (100), réalisant en particulier une entité ou fonctionnalité de collecte de données du réseau central (130) et/ou une entité ou fonctionnalité de pipeline de statistiques et d'apprentissage automatique du réseau central (140), ou en partie sur l'équipement utilisateur (20) et/ou en partie sur un nœud de réseau d'un réseau de communication mobile (100), réalisant en particulier une entité ou fonctionnalité de collecte de données du réseau central (130) et/ou une entité ou fonctionnalité de pipeline de statistiques et d'apprentissage automatique du réseau central (140), amènent l'ordinateur et/ou l'équipement utilisateur (20) et/ou le nœud de réseau du réseau de communication mobile (100), réalisant en particulier une entité ou fonctionnalité de collecte de données du réseau central (130) et/ou une entité ou fonctionnalité de pipeline de statistiques et d'apprentissage automatique du réseau central (140), à exécuter un procédé selon l'une des revendications 1 à 6.
